(19) Europäisches Patentamt / European Patent Office / Office européen des brevets

(11) **EP 1 726 973 B1**

(12) **FASCICULE DE BREVET EUROPEEN**

(45) Date de publication et mention
de la délivrance du brevet:
**09.12.2009 Bulletin 2009/50**

(51) Int Cl.:
**G01S 13/94** *(2006.01)*

(21) Numéro de dépôt: **06010337.1**

(22) Date de dépôt: **19.05.2006**

(54) **Procédé et dispositif d'aide au pilotage d'un aéronef à basse altitude**

Verfahren und Vorrichtung zur Unterstützung der Steuerung eines Flugzeugs in geringer Flughöhe

Device and procedure to assist piloting of an aircraft at low altitude

(84) Etats contractants désignés:
**DE GB**

(30) Priorité: **24.05.2005 FR 0505173**

(43) Date de publication de la demande:
**29.11.2006 Bulletin 2006/48**

(73) Titulaire: **EUROCOPTER**
**13725 Marignane Cédex (FR)**

(72) Inventeurs:
• **Pire, Richard**
**13800 Istres (FR)**
• **Filias, François-Xavier**
**13410 Lambesc (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:

| | |
|---|---|
| **FR-A- 2 712 251** | **FR-E- 87 853** |
| **US-A- 555 175** | **US-A- 3 396 391** |
| **US-A- 5 526 000** | **US-A- 5 892 462** |
| **US-B1- 6 243 482** | |

**Description**

La présente invention est relative à un procédé et à un dispositif d'aide au pilotage d'un aéronef à basse altitude.

Le domaine technique de l'invention est celui de la fabrication de systèmes d'aide au pilotage qui sont embarqués à bord de giravions.

La présente invention est plus particulièrement relative à un système d'aide au pilotage délivrant à un pilote ou à un calculateur un ordre à piquer ou un ordre à cabrer, afin que celui-ci puisse faire volet l'aéronef au plus près des obstacles (naturels ou artificiels) et/ou du terrain.

Voler au plus près des obstacles pour effectuer un vol contour (civil ou militaire) ou un vol tactique (militaire) est extrêmement difficile puisque le pilote ne peut se référer qu'à ce qu'il voit, à des aides extérieures (senseurs et caméras), la plupart du temps sans information de distance, et à sa connaissance de l'aéronef qu'il pilote (ressources possibles et facteur de charge notamment).

Dans de mauvaises conditions de visibilité ou de nuit, les vols de ce type deviennent quasiment impossibles.

Les aides au pilotage proposées pour l'heure permettent au mieux de disposer d'informations pour éviter les obstacles et les signaler, mais n'indiquent pas au pilote les possibilités de vol « optimales » au dessus des obstacles.

Les abréviations usuelles suivantes sont utilisées ci-après:

OWS ("Obstacle Warning System"): système de détection d'obstacles;

LIDAR ("LIght Detection And Ranging") : détection et télémétrie par la lumière ;

RADAR ("Radio Detection And Ranging"): détection et télémétrie radio;

CCD ("Charge Coupled Device") : dispositif à transfert de charge ;

IL : Intensification lumineuse;

IR : Infrarouge ;

1HM: Interface Homme Machine ;

HUD ("Head Up display ") : système de surimpression des informations au pilote pour un mode pilotage « tête haute » ;

HMS/D ("Helmet Mounted Sight / Display") : vision/affichage sur casque;

IRS ("Inertial Reference system"): système de référence inertielle;

INS ("Inertial Navigation System ") : système de navigation inertiel ;

AHRS ("Attitude and Heading Referential system") : système de reference de cap et d'attitude;

GPS ("Global Positioning system") : système de positionnement global;

FOV ("Field Of View"): champ optique;

FOR ("Field Of Regard ") : champ visuel (angle d'ouverture de la fenêtre d'acquisition).

Différents systèmes de pilotage automatique ou d'aide au pilotage d'un aéronef à basse altitude ont été proposés, qui utilisent une courbe (ou profil) de garde liée à l'aéronef, et qui comparent cette courbe - ce profil - au profil du terrain survolé et/ou s'étendant en avant de l'aéronef.

Une telle courbe de garde peut être essentiellement constituée par une simple droite horizontale s'étendant à une hauteur - dite hauteur de garde - prédéterminée sous l'aéronef; pour tenir compte des obstacles s'étendant en avant de l'aéronef, et pour retarder un ordre à cabrer après la détection d'un tel obstacle dépassant cette droite de garde horizontale, la courbe peut comporter une portion horizontale prolongée par un segment rectiligne incliné, en prenant ainsi une forme de « spatule de ski ».

Le brevet US 3396391 décrit des améliorations à ce type de courbe de garde et propose de modifier cette courbe en fonction du module et de l'inclinaison de la vitesse de l'aéronef.

Ce brevet décrit en particulier un profil de garde en piqué qui comporte un premier arc de cercle dont le rayon correspond au rayon à cabrer, ainsi qu'un second arc de cercle tangent au premier arc et dont le rayon correspond à la somme du rayon à cabrer et du rayon à piquer, la valeur de ces rayons dépendant du carré de la vitesse de l'aéronef ; ce brevet décrit également un dispositif délivrant des ordres à cabrer ou à piquer en fonction de la comparaison d'un tel profil de garde avec le profil du terrain balayé par un radar.

Les brevets FR 2712251 et US 5 555175 décrivent un procédé d'aide au pilotage dans lequel une courbe de garde est utilisée pour déterminer les obstacles dangereux pour l'aéronef ; selon ce procédé, on divise en secteurs angulaires le champ avant que l'aéronef est susceptible d'atteindre à partir de sa position courante, et on détermine pour chaque secteur les obstacles vus par un détecteur télémétrique ; on compare ensuite le sommet des obstacles à la courbe de garde pour sélectionner les obstacles les plus proches de cette courbe ; les sommets de ces obstacles sont présentés au pilote superposés à une image du paysage extérieur ainsi qu'à un réticule indiquant l'orientation du vecteur vitesse de l'aéronef, soit sous forme de réticules individuels, soit sous forme d'une courbe - dite courbe de pilotage - lissée reliant ces sommets ; pour volet au plus près des obstacles, le pilote doit superposer le réticule du vecteur vitesse à cette courbe.

Bien que ce procédé présente des avantages, il n'est pas adapté aux phases de vol en piqué ; par ailleurs, ce procédé ne délivre pas d'ordre à cabrer ou à piquer.

La ligne de sécurité (ou cordon de sécurité) calculé(e) selon cette méthode disparaît en cas de « cabrés » trop importants ; le pilote est tenu de maintenir le vecteur vitesse de l'aéronef au dessus du cordon de sécurité (avec alarme dès que celui ci passe en dessous), et cette courbe de sécurité ne lui permet pas de survoler les obstacles au plus près.

Un objectif de l'invention est de remédier, en partie au moins, à ces lacunes ou inconvénients.

Le brevet FR87853E décrit un procédé de pilotage d'avion définissant une courbe de garde dont les équations de vol correspondent aux équations mentionnées dans le préambule de la revendication 1.

Un objectif de l'invention est de proposer des procédés, dispositifs et/ou systèmes d'aide au pilotage d'un aéronef qui soient améliorés ; un autre objectif de l'invention est de proposer de tels procédés, systèmes ou dispositifs qui soient particulièrement bien adaptés aux giravions.

Un objectif de l'invention est de proposer un directeur (ou donneur) d'ordre afin que le pilote suive la meilleure trajectoire possible - dans un plan vertical - par rapport au relief qui lui fait face, en fonction de son vecteur vitesse, avec une matérialisation des consignes pat un cordon de sécurité qui peut faire office de directeur d'ordre ; le directeur d'ordre doit indiquer au pilote s'il faut monter (cabrer) ou descendre (piquer) afin de voler au plus près des obstacles avec une marge de sécurité (hauteur de garde).

Un objectif de l'invention est d'optimiser le calcul des trajectoires de suivi de pilotage possibles pour un grand domaine d'utilisation, avec pour but d'effectuer un vol tactique ou contour de manière sécurisée à l'aide d'un détecteur d'obstacle (OWS de type LIDAR ou RADAR notamment).

Selon un premier aspect, l'invention propose un procédé d'aide au pilotage d'un aéronef dans lequel on détermine une courbe de garde en fonction des ressources de l'aéronef, on mesure par télémétrie la position d'au moins un obstacle et/ou d'au moins un point du terrain situés en avant de l'aéronef, on calcule la distance (D) séparant la courbe de garde de l'obstacle (ou point du terrain), et on produit (de préférence) un ordre à piquer ou un ordre à cabrer en fonction de cette distance.

Selon un mode préféré de réalisation de l'invention, on détermine une première courbe de garde - dite courbe de garde statique -, en fonction notamment d'un rayon de courbure à cabrer et d'un rayon de courbure à piquer, ces deux rayons étant respectivement déterminés en fonction d'un facteur de charge à cabrer et d'un facteur de charge à piquer, ainsi qu'en fonction du module de la vitesse de l'aéronef ; pour déterminer la distance (D) séparant la courbe de garde statique du terrain, on calcule les distances séparant respectivement cette courbe de chacun des points du profil de terrain correspondant dont les coordonnées sont calculées à partir des coordonnées de plots délivrées par un télémètre et à partir d'informations de position de l'aéronef délivrées par un outil de navigation, puis on calcule la plus petite de ces distances, dont la valeur est affectée à ladite distance D.

Selon un mode de réalisation encore préféré, on détermine l'ordre à piquer ou à cabrer en fonction de la vitesse VRA selon laquelle le profil du terrain et/ou des obstacles se rapproche de ladite courbe de garde statique ; cette vitesse de rapprochement VRA est généralement calculée selon la formule:

$$ \mathrm{VRA} = \frac{\Delta D}{\Delta t}, $$

$\Delta D$ étant la variation de la distance D entre deux repères temporels (ou instants) successifs, $\Delta t$ étant la durée écoulée entre ces deux repères temporels.

De préférence encore, on choisit un temps de préavis $(\tau)$ et on produit un ordre à cabrer lorsque la somme de la distance D et du produit du temps de préavis r et de la vitesse de rapprochement VRA est négatif ; à contrario lorsque cette somme S (S = D + r * VRA) est positive, on produit un ordre à piquer.

Pour construire une courbe de pilotage, pour chaque profil de terrain (dans un plan vertical), on sélectionne le point du profil lorsqu'il existe - correspondant à un ordre à cabrer maximal, c'est-à-dire pour lequel la valeur absolue de ladite somme S - qui est dans ce cas négative - est maximale ; lorsque ladite somme S est positive, ce qui correspond à un ordre à piquer, ou nulle, pour tous les points du profil de terrain considéré, on peut choisir le point du profil pour lequel la valeur absolue de cette somme est minimale, pour voler au plus près du sol et des obstacles ; alternativement, on peut dans ce cas choisit le point du profil pour lequel l'expression T :

$$T = -D / \left( \frac{\Delta D}{\Delta t} \right)$$

est minimale, afin de rendre les ordres à piquer moins fréquents.

En retenant le point ainsi sélectionné pour chacun des profils de terrain correspondant à un balayage angulaire latéral (de gauche à droite par exemple) du champ de vision du pilote - ou espace en avant de l'aéronef -, et en formant un graphe des sites et gisements de ces points, on obtient une courbe de pilotage que l'on peut présenter au pilote, de préférence en superposition avec une image de ce champ ou espace, ainsi qu'avec une ligne d'horizon artificiel et un réticule visualisant le vecteur vitesse courant de l'aéronef.

Selon un mode préférentiel, la hauteur de garde est prédéterminée par le pilote ou peut être fonction de paramètres de l'aéronef, ce qui lui procure dans ce dernier cas un aspect dynamique.

De préférence, ladite courbe de garde statique comporte un premier arc de cercle dont le rayon est égal à la somme du rayon de courbure à piquer et d'une hauteur de garde par rapport au sol, ainsi qu'un deuxième arc de cercle tangent au premier arc de cercle - selon une tangente horizontale - et dont le rayon est égal à la somme du rayon de courbure à piquer et du rayon de courbure à cabrer.

Selon un autre aspect de l'invention, il est proposé un indicateur d'un niveau (ou degré) de dangerosité d'obstacles détectés par télémétrie en avant d'un aéronef, qui comporte des moyens de calcul d'un coefficient de préavis - ou niveau de dangerosité - en fonction de la distance D séparant une courbe de garde d'un profil du terrain, et en fonction de la dérivée (ou variation) temporelle de cette distance, cette dérivée correspondant à ladite vitesse de rapprochement des obstacles.

D'autres caractéristiques et avantages de l'invention apparaissent dans la description suivante, qui se réfère aux figures annexées et qui illustre, sans aucun caractère limitatif, un mode préféré de réalisation de l'invention.

La figure 1 est un schéma illustrant la construction d'une courbe de garde statique en fonction des performances d'un aéronef et celle d'une courbe de garde dynamique pour un exemple de profil vertical de terrain déterminé.

La figure 2 est un schéma dans un plan vertical illustrant quatre positions successives d'un aéronef se déplaçant pour éviter un obstacle en utilisant un procédé selon l'invention.

La figure 3 est un schéma dans un plan vertical illustrant la trajectoire théorique d'évitement d'un obstacle suivant deux arcs de cercle successifs.

La figure 4 est un schéma illustrant l'affichage sur un écran d'une courbe de pilotage, d'un horizon artificiel et d'un réticule représentatif du vecteur vitesse courant, dans un champ avant divisé en huit secteurs angulaires.

Les figures 5 et 6 illustrent schématiquement dans un plan vertical deux variantes de pilotage d'un aéronef confronté à deux obstacles.

Les figures 7 à 12 illustrent schématiquement la mise en oeuvre d'un procédé de suivi de terrain selon l'invention ; la figure 7 est une vue en coupe selon un plan vertical contenant la trajectoire, tandis que les figures 8 à 12 illustrent l'affichage d'une courbe de pilotage correspondant respectivement aux phases du vol illustré figure 7 qui sont repérées VIII à XII sur cette figure 7.

La figure 13 est un schéma synoptique d'un système selon l'invention.

PRESENTATION GENERALE

1) Calcul d'une courbe (ou cordon) directeur d'ordre

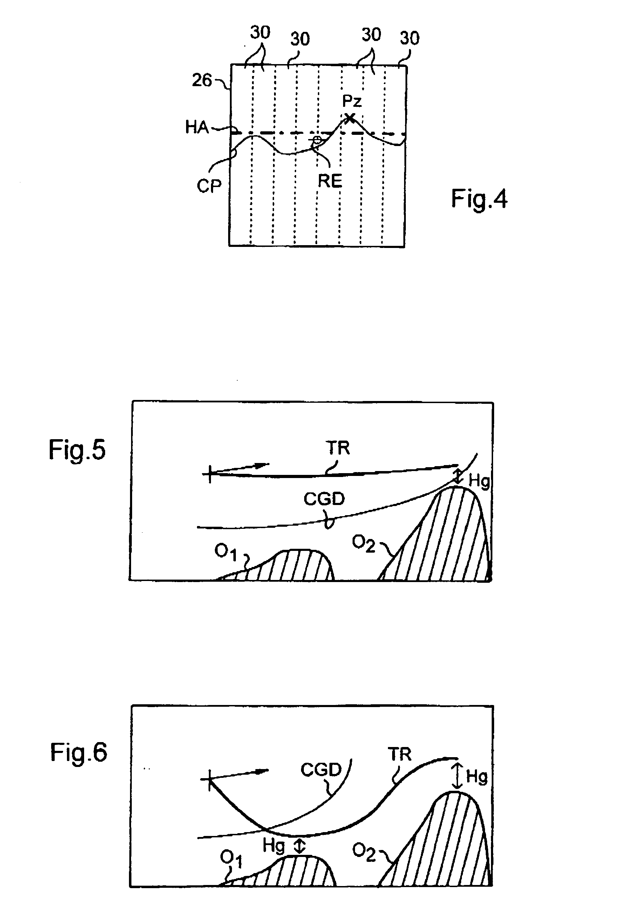

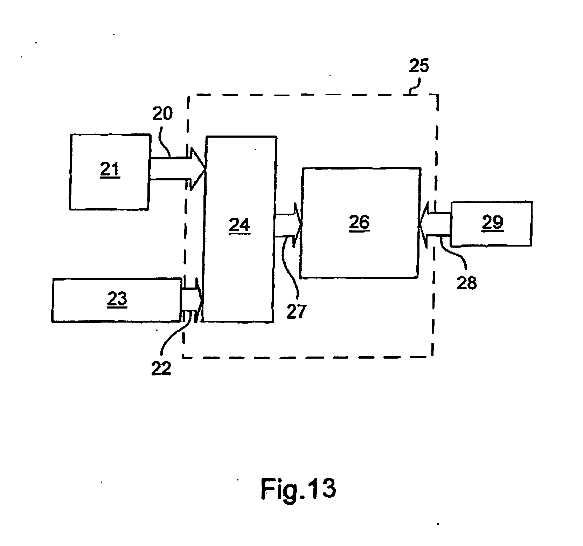

Par référence aux figures 4 et 13 en particulier, à partir de données 20 issues d'un OWS 21 embarqué que l'on redresse en repère cartésien dans l'espace grâce aux données 22 fournies par un outil 23 de navigation (INS, AHRS ou GPS, notamment), un module 24 du système 25 de suivi de terrain selon l'invention calcule dans huit secteurs 30 angulaires égaux prédéfinis en fonction du champ de regard horizontal (FOR) de l'OWS, les points d'une courbe de sécurité CP à présenter au pilote ; ces points, les coordonnées d'un réticule RE symbolisant le vecteur vitesse courante et celles d'un horizon artificiel HA forment les données 27 transmises par le module 24 à un afficheur 26.

Ces points de la courbe CP sont obtenus à partir de courbes de garde calculées en fonction des obstacles se trouvant en face de l'aéronef.

Cette courbe de sécurité CP aide le pilote à suivre le terrain (et sert de directeur d'ordre le cas échéant), en fonction de la position du vecteur vitesse de l'aéronef par rapport à cette courbe, ainsi que de la position du vecteur vitesse par rapport à la ligne de l'horizon artificiel.

Le pilote, par un pilotage adapté fonction de son vecteur vitesse, de la ligne d'horizon artificiel et du directeur d'ordre (ordre à cabrer ou piquet), doit maintenir son vecteur vitesse au plus près de cette courbe de sécurité calculée.

La ligne d'horizon artificiel donne une information supplémentaire utile à la compréhension par le pilote de son action relative à cette courbe de sécurité.

Un procédé ou système préféré selon l'invention utilise deux courbes de garde - respectivement dites statique et dynamique - qui permettent le calcul de paramètres synthétiques pour un pilotage rationnel :

- une courbe de garde statique est calculée à l'aide d'un rayon de courbure à cabrer et d'un rayon de courbure à piquer (comme explicité en détail ci-après) ; cette courbe permet de calculer un temps de préavis ainsi qu'une marge de passage par rapport à un obstacle situé face à l'aéronef, en fonction du vecteur vitesse ;

- un calcul de l'ordre d'évitement est réalisé en fonction d'une courbe de garde dynamique qui est calculée en fonction d'un facteur de distance (D) et de rapprochement (dD/dt) des obstacles par référence à la courbe de garde statique, ainsi que du module du vecteur vitesse ; cette deuxième courbe de garde évalue de façon dynamique la trajectoire de l'aéronef qui approche au plus près les obstacles présents dans le FOV de l'OWS.

La ligne de sécurité présentée au pilote et calculée selon la présente invention est ainsi fonction d'une courbe de garde dynamique évaluée à partir de la courbe de garde statique.

A partir du calcul de ces deux courbes de garde, on calcule un « cordon » directeur d'ordre asservi au vecteur vitesse $\overline{V}$(Vx, Vy, Vz), selon la description détaillée ci-après ; un point de ce cordon correspond à un point situé au dessus de l'obstacle faisant face à l'aéronef qui donne l'ordre à cabrer maximum ou l'ordre à piquer minimum (avec une marge qui correspond à une hauteur de garde prédéterminée ou variable en fonction des paramètres de vol).

2) <u>système et affichage au pilote de la courbe de garde/directeur d'ordre</u>

Un système selon l'invention comporte (ou est relié à) un détecteur d'obstacles capable de donner des « plots » (dans un repère 3d) face à l'aéronef ; de préférence, on utilise un OWS de type LIDAR (ou RADAR millimétrique) afin de détecter de façon robuste des obstacles filaires.

Avec les plots bruts acquis dans l'espace 3d (Si, Gi, Di) (Si : angle du Site, Gi : angle du Gisement et Di : Distance), en utilisant les données de navigation, on transforme les plots mesurés en coordonnées 3d dans un repère cartésien (x, y, z) lié au sol ; cette opération est effectuée par l'unité de calcul 24 qui calcule en outre la « ligne de sécurité/directeur d'ordre ».

Au niveau de cette unité de calcul on intègre pour l'affichage l'horizon artificiel calculé par les outils de calcul inertiels (AHRS).

A l'aide d'une caméra externe (29 figure 13), on obtient une image 28 temps réel de la scène extérieure (imageur IL, IR, CCD ou autre).

On superpose à l'image acquise par la caméra le cordon de sécurité (directeur d'ordre) calculé par la méthode détaillée ci-après, avec le vecteur vitesse, en mode tête haute (HUD ou HMS/D) ; sur ce même affichage, on fait également apparaître la ligne d'horizon artificiel.

Les instructions à cabrer ou à piquer en fonction de ce cordon de sécurité (de suivi de terrain) peuvent se faire soit à l'aide de flèches indiquant la direction vers laquelle le pilote doit orienter la flèche du vecteur vitesse de l'aéronef, soit à l'aide d'instructions sonores de type « pull up » ou « sink rate ».

La ligne d'horizon artificiel aide à la compréhension de la scène extérieure. Etant donné que l'évitement de l'obstacle doit se faire horizontalement dans une trajectoire verticale, le pilote pourra savoir s'il est bien « disposé » pour éviter l'obstacle, malgré une vision très dégradée.

Dans un mode d'affichage en tête basse, il peut être prévu un système d'alarmes de suivi de terrain à l'aide d'avertisseurs lumineux et sonores proportionnels à la dangerosité et à la direction que devrait suivre le pilote en cabré ou piqué, par secteurs angulaires dans le FOR.

DESCRIPTION DETAILLEE D'UN MODE PREFERE DE REALISATION DE L'INVENTION

L'OWS et les instruments de navigation permettent d'obtenir un « nuage » des points du sol dans un repère « sol » d'un espace à trois dimensions. Un LIDAR peut être utilisé par temps clair, et un RADAR peut être utilisé lorsque le LIDAR n'est plus opérant (lors de mauvaises conditions climatiques).

A partir des données délivrées par ces instruments, un calculateur estime les deux courbes de garde et les utilise afin de déterminer le cordon de sécurité qui va servit comme directeur d'ordre afin de voler au plus près du terrain avec une hauteur de garde donnée (marge de franchissement d'un obstacle).

Pour chacun des secteurs angulaires prédéfinis, on détermine un ou plusieurs point(s) de la « courbe de sécurité/directeur d'ordre ».

Le vecteur vitesse de l'aéronef doit être maintenu au plus près du cordon de sécurité ; des marges de proximités sont déterminées pour ne pas avoir en permanence des alarmes dès que le vecteur vitesse s'éloigne du cordon directeur d'ordre.

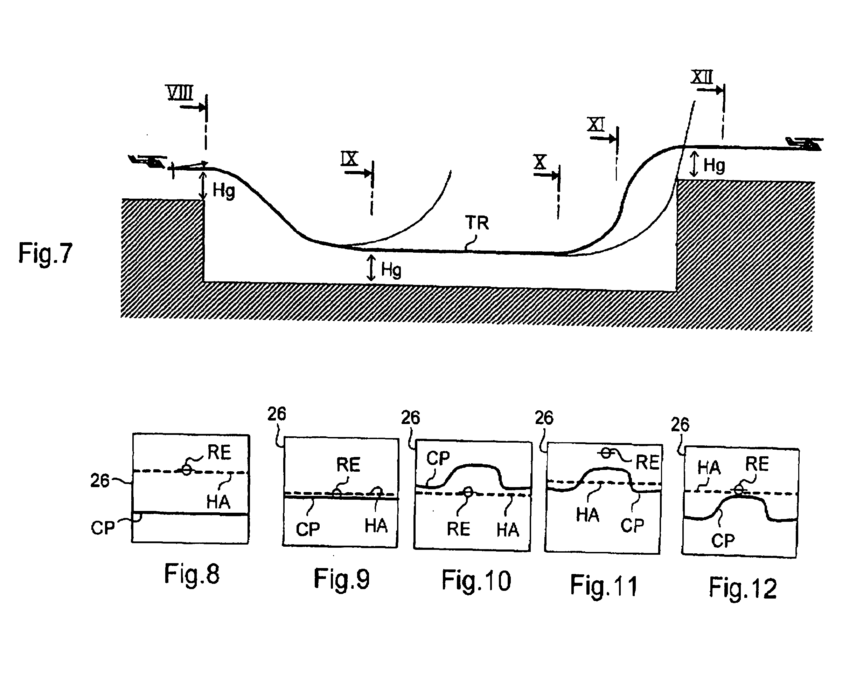

La ligne d'horizon aide le pilote à positionner le symbole représentatif du vecteur vitesse de l'aéronef sur le cordon de sécurité (figures 7 à 12).

Un ordre à piquer est généré lorsque le vecteur vitesse se trouve au dessus du cordon, en étant séparé d'une valeur supérieure à la marge de proximité ; à l'inverse, un ordre à cabrer est généré lorsque le vecteur vitesse passe en dessous du cordon, en étant séparé d'une valeur supérieure à la marge de proximité.

Un système d'affichage en mode tête haute sur lequel on superpose la ligne directrice d'ordres préalablement calculée, le vecteur vitesse et la ligne d'horizon artificiel sur une image de l'environnement extérieur, sert d'interface homme machine.

Dans la configuration illustrée figure 8, le cordon se trouve en dessous du vecteur vitesse ; on a donc un ordre à piquer et le pilote doit appliquer le facteur de charge à piquer.

Dans la configuration illustrée figure 9, le cordon CP, le vecteur vitesse RE et la ligne d'horizon HA sont alignés : l'ordre à piquer et l'ordre à cabrer sont nuls.

Dans la configuration illustrée figure 10, un ordre à cabrer est généré ; le pilote applique le facteur de charge à cabrer de façon à avoir le vecteur vitesse symétriquement opposé à l'horizon par rapport au cordon.

Dans la configuration illustrée figure 11, le pilote est en train de cabrer ; le vecteur vitesse est situé au dessus du cordon ; le pilote cherche grâce à cette manoeuvre à aligner le vecteur vitesse sur la ligne d'horizon, en tangentant le mieux possible le cordon de sécurité, c'est-à-dire sans passer sous celui-ci.

Dans la configuration illustrée figure 12, le cordon est stabilisé par rapport à la ligne d'horizon, le vecteur vitesse étant situé sur le cordon de sécurité.

La courbe de sécurité illustrée figures 4 et 9 à 13 remplit deux fonctions : celle de cordon de sécurité (le vecteur vitesse doit toujours être au-dessus du cordon), et celle de directeur d'ordre pour suivre le terrain au plus près.

Calcul de la courbe de garde statique

Le but de la fonction « suivi de terrain » est de fournit les ordres de pilotage (pour pilotage manuel ou automatique) de sorte que l'aéronef décrive une trajectoire dans le plan vertical telle qu'au dessus d'un sol sensiblement horizontal ou peu accidenté, l'altitude relative h de l'aéronef soit aussi voisine que possible de l'altitude de garde Hg (constante affichée par le pilote), et telle qu'au dessus d'un sol au relief tourmenté, le franchissement des crêtes ait lieu à une altitude relative voisine de Hg avec un vecteur vitesse sensiblement horizontal.

Les facteurs de charge en cabré et en piqué étant limités, la trajectoire optimale est obtenue lorsque l'aéronef utilise les facteurs de charge maxima prévus (nc et np définis plus loin).

Pour le franchissement d'un obstacle élevé et lointain dans le champ face à l'aéronef :

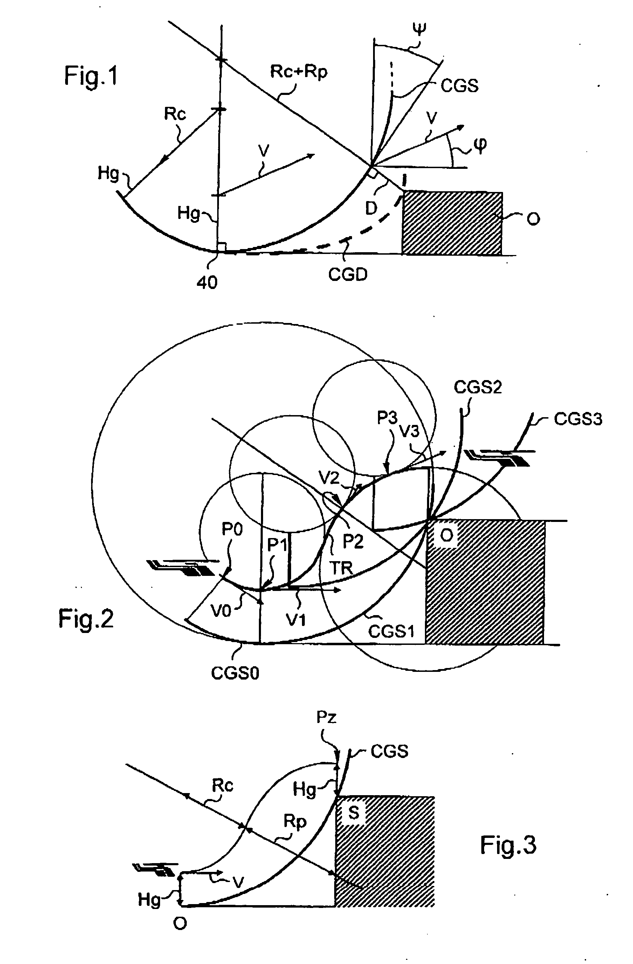

L'hélicoptère se déplaçant selon le vecteur vitesse V (Vx, Vy, Vz) à une hauteur de garde Hg vis-à-vis du sol et rencontrant un obstacle à une hauteur S, la manoeuvre d'évitement de l'obstacle par l'hélicoptère consiste en une manoeuvre à cabrer puis à piquer pour se retrouver à la hauteur Hg au-dessus de l'obstacle O (voir figures 2-3).

Si on travaille à facteur de charge maximum à cabrer nc et à piquer np, la trajectoire optimum est composée de deux arcs de cercle de rayon Rc et Rp ; les facteurs de charge à cabrer nc et à piquer np sont fonction de l'angle de roulis de l'aéronef.

La courbe de garde statique CGS est définie comme la courbe où la ressource est possible pour tous les obstacles se situant à « l'extérieur » (par référence à la position de l'aéronef) et impossible pour tous les obstacles se situant à « l'intérieur ».

Ces deux rayons de courbure sont respectivement définis par les relations suivantes :

$$\mathrm{Rc} = \frac{V^2}{g*(nc-1)} \quad \mathrm{et} \; \mathrm{Rp} = \frac{V^2}{g*(1-np)} \quad ,$$

dans lesquelles :

V est la vitesse de l'aéronef ;

g est l'accélération de la pesanteur

Rc est le rayon de courbure à cabrer ;

Rp est le rayon de courbure à piquer.

Les-coordonnées X, Y de la courbe de garde sont telles que :

$$\mathrm{X} = (\mathrm{Rc} + \mathrm{Rp})\cos(\psi), \; \mathrm{et} \; \mathrm{Y} = (\mathrm{Rc} + \mathrm{Rp})(1\text{-}\sin(\psi))$$

En éliminant $\psi$, on obtient :

$$\mathrm{X}^2 + (\mathrm{Y} - \mathrm{R})^2 = \mathrm{R}^2; \; \text{où} \; \mathrm{R} = \mathrm{Rc} + \mathrm{Rp}$$

La courbe de garde statique CGS comporte un arc de cercle de rayon R = Rc + Rp.

Pour la prise de contact avec le sol à l'altitude Hg (après avoir franchi une crête)

Dans ce cas, l'angle $\varphi$ que fait le vecteur vitesse avec l'horizontale est compris entre (-$\Pi$/2) et 0.
Pour que l'aéronef passe d'une phase de vol en piqué (en descente à pente constante) à une phase de vol horizontal à la hauteur Hg au-dessus du sol, la trace de sa trajectoire dans un plan vertical s'effectue selon un arc de cercle dont le rayon est égal au rayon à cabrer.
Ainsi, lorsque l'aéronef est en piqué, il est nécessaire de compléter la courbe de garde CGS (vers la gauche) par un arc de cercle de rayon égal à la somme (Rc + Hg).
La courbe de garde statique CGS est ainsi composée de deux arcs de cercle de rayons respectifs (Rc + Hg) et (Rp + Rc) et présentant une tangente horizontale commune à leur point 40 de raccordement mutuel, comme illustré figure 1 en particulier.
Cette courbe CGS se déplace avec l'aéronef dans des conditions dépendant des orientations successives du vecteur vitesse au cours du vol ; on peut cependant noter que, tant que l'aéronef cabre, la courbe CGS reste immobile ; en effet, l'aéronef est alors capable, en prolongeant plus ou moins son cabré, de passer au dessus de tout obstacle situé à l'extérieur de la courbe de garde statique.
Par contre, dès que l'aéronef entame un piqué, il faut faire pivoter la courbe de telle sorte que le vecteur vitesse soit toujours parallèle à la tangente à la courbe en S.
Le calcul des ordres de pilotage doit s'effectuer pour qu'aucun obstacle ne pénètre à l'intérieur de cette courbe de garde statique ; à défaut, les limitations en facteur de charge du système ne permettraient plus à l'aéronef de passer à l'altitude minimale Hg au-dessus des obstacles.
L'évolution de la courbe de garde statique de CGS0 en CGS1, puis CGS2, puis CGS3, se fait donc en fonction de la direction du vecteur vitesse $\vec{V}n$ aux points Pn ($n \in \{0,1,2,3\}$) successifs de la trajectoire TR, comme illustré schématiquement figure 2.

La courbe de garde dynamique :

Il est donc nécessaire d'asservir à chaque instant la courbe de garde à l'obstacle le plus dangereux, ce qui revient à modifier en permanence la trajectoire de l'aéronef pour que la courbe de garde « glisse » sur cet obstacle.
On prend l'hypothèse que le franchissement d'obstacle se fait à vitesse constante.

En notant D l'« enfoncement » de l'obstacle dans la courbe de garde, c'est-à-dire la plus petite distance entre le profil des obstacles et la courbe de garde statique, et en notant G un gain « ergonomique » permettant de rendre l'ordre proportionnel à l'affichage grandeur réel pour le pilote, on choisit un ordre égal au produit (G * D).

En pratique, cet ordre consiste en la variation de l'angle (noté $\varphi$) que fait le vecteur vitesse avec l'horizontale, qui est telle que: $\dfrac{d\varphi}{dt} = G * D$.

Le calcul de la courbe de garde statique permet de calculer D et $\dfrac{dD}{dt}$ dans un modèle théorique.

Pour stabiliser le système, on introduit un terme d'amortissement dans l'équation précédente qui devient :

$$\dfrac{d\varphi}{dt} = G * (D + \tau * \dfrac{dD}{dt}).$$

La courbe de garde dynamique CGD définie pour un système de suivi de terrain dans le plan vertical est le lieu des points des obstacles donnant un ordre à piquer ou à cabrer nul ; la forme de cette courbe CGD est proche de celle d'une « spirale » (cf. figure 1).

Ainsi au cours d'une mission de suivi de terrain, la courbe de garde dynamique « glisse » sur les obstacles au fur et à mesure de l'avancement de l'appareil.

La courbe de garde dynamique est donc définie par l'équation suivante:

$$D + \tau * \dfrac{dD}{dt} = 0$$

où D est l'enfoncement de l'obstacle dans la courbe de garde statique et $\tau$ est une constante de temps en secondes (négative).

La courbe de garde dynamique est utilisée pour le calcul de l'ordre et pour matérialiser le cordon de sécurité/ directeur d'ordre.

Pour chaque plan vertical du champ scruté, le calculateur d'évitement d'obstacles calcule les valeurs D et $\dfrac{dD}{dt}$ à partir du profil du terrain dans ce plan et de la courbe de garde statique, et transmet l'ordre d'évitement pour le pilotage.

La valeur $\tau$ sert à donner une durée de préavis par rapport à un obstacle durant un vol ; cette valeur est une constante que l'on peut faire varier pour modifier le type de pilotage : à une valeur de $\tau$ élevée, correspond un pilotage à variations progressives (figure 5), tandis qu'à une valeur de $\tau$ faible correspond un pilotage à variations brutales (figure 6).

Sur la figure 5, avec un élevé, l'obstacle le plus dangereux est l'obstacle 02 ; le cordon de sécurité indique une trajectoire de vol en suivi de terrain avec la hauteur de garde Hg sur cet obstacle.

Sur la figure 6, la courbe de garde ne se trouve pas sur l'obstacle 02 ; on donne un ordre à piquer sur l'obstacle 01, pour le passer à la hauteur de garde Hg, puis on franchit ensuite l'obstacle 02 avec la trajectoire de vol adéquate, lorsque la courbe de garde CGD rencontre cet obstacle, en raison du temps de préavis plus court que celui correspondant à la figure 5.

Afin d'obtenir un pilotage plus « mou », on peut également utiliser des facteurs de charge nc et np plus faibles.

Nota : Le terme $\dfrac{dD}{dt}$ peut être remplacé par le terme [V* Cos($\psi+\varphi$)]; il correspond à la « vitesse de rapprochement » à l'obstacle

L'affichage en tête basse de la courbe dynamique CGD sur une visualisation de type site/distance (telle que celle illustrée figures 6 et 7), associée à une image du terrain, permet au pilote une excellente surveillance de ce système de suivi de terrain.

Application préférée pour un aéronef à voilure tournante :

On rationalise le pilotage par la présentation d'informations synthétiques immédiatement compréhensibles et qui déclenchent une action simple de l'équipage ; en présence d'obstacles, le pilote doit connaître à tout instant la marge de franchissement des obstacles qui déclenchera une action de type « Pull-up » automatique ou manuelle.

Cette marge se décompose en trois facteurs liés : la hauteur de garde (distance minimum de survol de l'obstacle), les facteurs de charges de la manoeuvre à effectuer, et le temps de préavis avant application de la ressource.

Si on fixe deux de ces paramètres, le troisième devient l' « image » de la marge de franchissement de l'obstacle ; étant donné que les facteurs de charges maxima en opération sont donnés par la résistance mécanique de l'appareil, et que la hauteur de garde est donnée par les performances du système de suivi de terrain et de navigation, le temps de préavis est de préférence choisi comme image de la dangerosité de l'obstacle.

Cette image peut être donnée sous forme d'alarmes ambres et rouges en mode tête basse, et/ou sous la forme d'un cordon de sécurité en site/gisement dont le site est une fonction du temps de préavis en mode tête haute.

La présentation de la courbe de garde dynamique et d'un directeur d'ordre permet à l'équipage de surveiller à chaque instant l'intégrité du système d'évitement d'obstacles.

Calcul et affichage du cordon de sécurité directeur d'ordre :

A partir des données de l'OWS, on obtient des plots 3d face au pilote dans un repère sol (x, y, z) ; on calcule une courbe de garde statique qui donne une marge de passage Hg au dessus des obstacles qui sert à indiquer l'obstacle le plus proche qui servira de base au calcul au cordon directeur d'ordre.

En fonction de la courbe de garde calculée pour chaque secteur angulaire (8 secteurs pour l'exemple illustré figure 4) on obtient des points -tels que Pz figure 4- qui correspondent, sur le cordon de sécurité, à l'obstacle à l'approche duquel on doit cabrer ou bien à l'obstacle à l'approche duquel on doit piquer, en alignant le vecteur vitesse (et la ligne d'horizon artificiel) sur ledit cordon.

En fonction de la « dureté » souhaitée du mode de suivi de terrain, l'obstacle qui détermine l'ordre peut différer, mais sa détermination est basée sur les calculs de courbes de garde et les temps de préavis définis ci-avant.

Dans le cas d'un vol militaire, le pilote cherche à voler au plus près des obstacles afin d'éviter de se faire détecter par les antennes radars.

Le point qui minimise l'ordre à piquer ou maximise l'ordre à cabrer face à l'aéronef pour le pilotage en fonction du vecteur vitesse et des données de l'aéronef sert à la construction du « cordon de sécurité/directeur d'ordre ».

Si l'on a plusieurs possibilités à cabrer ou piquer, on prend le point d'ordre à cabrer qui maximise les ordres à cabrer possibles.

C'est à dire si $\left( D + \tau * \dfrac{dD}{dt} \right) < 0,$ on cherche l'ordre à cabrer maximum pour les points rencontrés face à l'aéronef tels que la quantité $D + \tau * \dfrac{dD}{dt}$ soit minimale en valeur algébrique.

Si l'on n'a aucun ordre à cabrer (parmi les points du profil de terrain considéré), on prend l'ordre à piquer qui minimise les ordres à piquer possibles.

C'est à dite si $\left( D + \tau * \dfrac{dD}{dt} \right) >= 0,$ on choisit le point qui minimise l'ordre à piquer :

$$\mathrm{Min}\left( D + \tau * \frac{dD}{dt} \right).$$

Dans le cas d'un vol civil, le pilote cherche à voler au plus près des obstacles, mais les ordres à piquer sont moins fréquents afin d'éviter tout risque inutile et répondre à d'autres exigences de pilotage.

Comme pour les vols de type « militaire », on construit le cordon de sécurité à partir du point qui maximise l'ordre à cabrer et de celui qui minimise l'ordre à piquer.

Si l'on a plusieurs possibilités à cabrer ou piquer, on prend le point d'ordre à cabrer qui maximise les ordres à cabrer possibles :

si $(D + \tau * \dfrac{dD}{dt}) < 0,$ on cherche le point qui a le site le plus élevé en face de l'aéronef.

Pour le calcul de l'ordre à piquer ou non, c'est à dire si $(D + \tau * \dfrac{dD}{dt}) >= 0$ on peut procéder différemment que pour le vol « militaire » : on calcule une valeur T définie par : $T = -\dfrac{D}{\dfrac{dD}{dt}}.$ Cette valeur correspond au temps nécessaire avant l'application d'une ressource. Parmi les obstacles se trouvant dans le secteur angulaire considéré, on choisit celui qui possède la valeur T la plus basse.

Alarmes de détection d'obstacles en mode tête basse

Un indicateur visuel de dangerosité d'obstacles selon l'invention comporte un ensemble de voyants colorés (ambres et rouges par exemple) donnant la dangerosité de l'obstacle en gisement par rapport à la ligne de foi de l'aéronef (axe de vol) par secteur angulaire du champ en avant de l'aéronef ; cet ensemble peut comporter trois rangées de LED colorées (cyan, ambre et rouge).
La fonction de cet indicateur composé de plusieurs lignes de diodes et fixé dans la partie supérieure de la planche de bord ou sur la casquette, est de donner, à partir de l'oeil théorique pilote, la direction des zones inaccessibles (en rouge), la direction des zones dangereuses (en ambre), et la direction du vecteur vitesse (en cyan).
Ce bandeau de voyants matérialise la dangerosité des obstacles dans ledit secteur. L'alarme rouge peut par exemple être déclenchée pour un temps de préavis de 5s (secondes) et l'alarme ambre pour un temps de préavis de 20s.
Pour chaque obstacle, on calcule la valeur d'un coefficient de préavis comme suit :

$$Coeff - Pr\acute{e}avis = G \times \left( -\dfrac{(D)}{\dfrac{dD}{dt}} + \tau \times \left[ \dfrac{d\left( \dfrac{(D)}{\dfrac{dD}{dt}} \right)}{dt} \right] \right).$$

où G est un gain ergonomique, $\tau$ une constante de temps d'amortissement, et D un enfoncement de l'obstacle dans la courbe de garde statique.
On détermine pour ce coefficient deux seuils correspondant aux deux alarmes (ambre et rouge); si le coefficient de préavis passe en dessous d'un des deux seuils, l'alarme correspondante est déclenchée.

Les valeurs D et $\dfrac{dD}{dt}$ dépendent des rayons de courbures à cabrer et à piquer, donc des facteurs de charges maxima à cabrer et à piquer.

Pour un vol d'un premier type (militaire), on prend en compte avec $D + \tau * \dfrac{dD}{dt},$ des valeurs spécifiques

pour $\tau$, nc (facteur de charge maximum à cabrer) et np (facteur de charge maximum à piquer).
On détermine d'abord un temps de préavis général $\tau$ qui peut être évolutif et réglé comme décrit précédemment.
On détermine alors 3 cas (qui peuvent être évolutifs en intensité entre les valeurs choisies) à partir de deux jeux de valeurs prédéterminées nc1, np1, $\tau$1 et nc2, np2, $\tau$2.

Avec ces jeux de valeurs, on calcule les valeurs : $D1 + \tau1 * \dfrac{dD1}{dt}$ et $D2 + \tau2 * \dfrac{dD2}{dt}$ (avec D1 fonction de nc1, np1 ; et D2 fonction de nc2, np2).

a) Si $D1 + \tau1 * \dfrac{dD1}{dt} > 0$ : pas d'alarme.

b) Si $D2 + \tau2 * \dfrac{dD2}{dt} < 0$ : alarme rouge.

c) Si $D1 + \tau1 * \dfrac{dD1}{dt} \leq 0$ et $D2 + \tau2 * \dfrac{dD2}{dt} \geq 0$ : alarme ambre.

Pour les vols d'un second type civil, on prendra en compte avec $dD$ $D + \tau * \dfrac{dD}{dt}$ une valeur T définie par :

$$T = -\dfrac{D}{\dfrac{dD}{dt}}$$

Selon la valeur que prend ce paramètre T, aucune alarme n'est activée si T est supérieur à un certain temps t1 ; une alarme ambre est activée si T est compris entre deux valeurs de temps prédéterminées t1 et t2 (telles que t2<t1) ; une alarme rouge (pour un danger « imminent ») est activée si T est inférieur au temps t2.

Le cordon de sécurité peut être une courbe reliant les crêtes respectives des obstacles les plus dangereux ; en variante, on peut visualiser un cordon de sécurité en site/gisement, où le site correspond directement à la dangerosité de l'obstacle.

En considérant que la dangerosité d'un obstacle est fonction d'un temps de préavis, on définit un coefficient de préavis comme ci avant.

Une valeur prédéfinie de la hauteur de garde (ou talon) correspond à la position en site du vecteur vitesse à tout instant; pour des obstacles éloignés le coefficient de préavis est supérieur au talon, ce qui donne un cordon en dessous du vecteur vitesse, ce qui correspond à une zone de sécurité ; pour des obstacles plus proches, ledit coefficient est supérieur au talon et le cordon est au-dessus du vecteur vitesse, correspondant à une zone de danger.

Une commande de commutation peut être prévue pour permettre à l'équipage de visualiser l'un ou l'autre des cordons à la demande : cordon en ligne de crête ou en temps de préavis.

Remarque: le facteur de charge N demandé par la ressource nécessaire à l'évitement de l'obstacle est calculé par la formule :

$$N = \cos \varphi * \dfrac{V}{G} * [G * (D + \tau * \dfrac{dD}{dt})].$$

L'invention est particulièrement adaptée au suivi de terrain avec de fortes variations de l'orientation du vecteur vitesse, pour l'aide au pilotage d'un aéronef à voilure tournante.

**Revendications**

1. Procédé d'aide au pilotage d'un aéronef dans lequel on détermine une courbe de garde en fonction des ressources de l'aéronef, dans lequel on mesure par télémétrie la position d'un obstacle ou point du terrain situé en avant de l'aéronef, on calcule la distance (D) séparant la courbe de garde de l'obstacle ou point du terrain, et on produit un ordre à piquer ou un ordre à cabrer en fonction de cette distance,

l'ordre à piquer ou à cabrer $\dfrac{d\varphi}{dt}$ étant déterminé selon la formule :

$$\frac{d\varphi}{dt} = G * (D + \tau * \frac{dD}{dt}),$$ où G est un gain et ($\tau$) est un temps de préavis,

et dans lequel on produit un ordre à cabrer lorsque la somme $\left(D + \tau * \dfrac{dD}{dt}\right)$ est négative, et on produit un ordre à piquer lorsque cette somme est positive,

**caractérisé en ce qu'**on calcule dans plusieurs secteurs (30) angulaires prédéfinis en fonction d'un champ de regard (FOR), les points d'une courbe de pilotage (CP) que l'on présente au pilote en sélectionnant, lorsqu'il existe, pour chaque profil vertical de terrain dans un secteur angulaire prédéfini, le point du profil correspondant à un ordre à cabrer maximal, et à défaut, en sélectionnant soit le point du profil correspondant à un ordre à piquer minimal, soit le point du profil pour lequel l'expression $T = -D / \left(\dfrac{\Delta D}{\Delta t}\right)$ est minimale.

2. Procédé selon la revendication 1 dans lequel on détermine une courbe de garde statique (CGS) en fonction d'un rayon de courbure à cabrer et d'un rayon de courbure à piquer, ces deux rayons étant respectivement déterminés en fonction d'un facteur de charge à cabrer et d'un facteur de charge à piquer, ainsi qu'en fonction du module de la vitesse de l'aéronef, et dans lequel, pour déterminer la distance (D) séparant la courbe de garde statique d'un profil du terrain dans un plan vertical, on calcule les distances séparant respectivement cette courbe de chacun des points du profil de terrain, dont les coordonnées sont calculées à partir des coordonnées de plots délivrées par un télémètre et à partir d'informations de position de l'aéronef délivrées par un outil de navigation, puis on calcule la plus petite de ces distances, dont la valeur est affectée à ladite distance (D).

3. Procédé selon l'une quelconque des revendications 1 ou 2 dans lequel on présente au pilote la courbe de pilotage en superposition avec une image du champ ou espace avant de l'aéronef, ainsi qu'avec une ligne d'horizon artificiel et un réticule visualisant le vecteur vitesse coursant de l'aéronef.

4. Procédé selon l'une quelconque des revendications 1 à 3 dans lequel ladite courbe de garde statique comporte un premier arc de cercle dont le rayon est égal à la somme du rayon de courbure à piquer et d'une hauteur de garde Hg par rapport au sol, ainsi qu'un deuxième arc de cercle tangent au premier arc de cercle - selon une tangente horizontale - et dont le rayon est égal à la somme du rayon de courbure à piquer et du rayon de courbure à cabrer.

5. Procédé selon la revendication 4, dans lequel la hauteur de garde varie en fonction de paramètres de vol de l'aéronef.

6. Procédé selon l'une quelconque des revendications 1 à 5 dans lequel on calcule un niveau de dangerosité d'un obstacle en fonction de la distance (D) séparant une courbe de garde d'un profil du terrain comportant l'obstacle, et en fonction de la dérivée (ou variation) temporelle de cette distance, cette dérivée correspondant à la vitesse de rapprochement de l'obstacle.

7. Procédé selon l'une quelconque des revendications 1 à 6 dans lequel on calcule pour chaque obstacle ou point d'un profil vertical de terrain, un coefficient de préavis représentatif de la dangerosité de l'obstacle, selon la formule :

$$Coeff - Pr\acute{e}avis = G \times \left( -\frac{(D)}{\frac{dD}{dt}} + \tau \times \left[ \frac{d\left(\frac{(D)}{\frac{dD}{dt}}\right)}{dt} \right] \right),$$

où G est un gain.

8. Procédé selon l'une quelconque des revendications 1 à 7 dans lequel on présente au pilote un indicateur visuel de dangerosité d'obstacles qui comporte un ensemble de voyants colorés représentatifs de la dangerosité d'obstacles, en gisement par rapport à la ligne de foi de l'aéronef, par secteur angulaire du champ en avant de l'aéronef.

9. Procédé selon l'une quelconque des revendications 1 à 8 dans lequel on active une alarme visuelle en fonction des valeurs du temps de préavis ($\tau$), d'un facteur de charge à cabrer (nc), et d'un facteur de charge à piquet (np).

10. Système (24 à 26) d'aide au pilotage d'un aéronef,
**caractérisé en ce qu'**il est programmé pour la mise en oeuvre d'un procédé selon l'une quelconque des revendications 1 à 9.

## Claims

1. A procedure for assisting the piloting of an aircraft in which a guard curve is determined as a function of the resources of the aircraft, in which the position of an obstacle or a point of the terrain situated ahead of the aircraft is measured by telemetry, the distance (D) between the guard curve and the obstacle or point of the terrain is calculated, and a command to dive or a command to pull up is produced as a function of this distance,

the command to dive or to pull up $\frac{d\varphi}{dt}$ being determined in accordance with the formula:

$$\frac{d\varphi}{dt} = G * (D + \tau * \frac{dD}{dt}),$$ where G is a gain and ($\tau$) is a warning time,

and in which a command to pull up is produced when the sum $(D + \tau * \frac{dD}{dt})$ is negative, and a command to dive is produced when this sum is positive,
**characterised in that** there are calculated in a plurality of angular sectors (30) predefined as a function of a field of regard (FOR), the points of a piloting curve (CP) which are presented to the pilot by selecting, when it exists, for each vertical terrain profile in a predefined angular sector, the point of the profile corresponding to a maximum command to pull up, and if there is no such point, by selecting either the point of the profile corresponding to a minimum command to dive, or the point of the profile for which the expression $T = -D / \left( \frac{\Delta D}{\Delta t} \right)$ is minimum.

2. A procedure according to Claim 1, in which a static guard curve (CGS) is determined as a function of a pull-up radius of curvature and of a dive radius of curvature, these two radii being determined as a function of a pull-up load factor and of a dive load factor respectively, and also as a function of the modulus of the velocity of the aircraft, and in which, to determine the distance (D) between the static guard curve and a profile of the terrain in a vertical plane, there are calculated the distances between this curve and each of the points of the terrain profile respectively, the coordinates of which are calculated from the coordinates of plots supplied by a range-finder and from position data of the aircraft which are supplied by a navigation tool, and then the smallest of these distances, the value of which is allocated to said distance (D), is calculated.

3. A procedure according to any one of Claims 1 or 2, in which the piloting curve is presented to the pilot superposed with an image of the forward field or space of the aircraft, and also with an artificial horizon line and cross-hairs displaying the current velocity vector of the aircraft.

4. A procedure according to any one of Claims 1 to 3, in which said static guard curve comprises a first arc of a circle, the radius of which is equal to the sum of the dive radius of curvature and of a guard height Hg relative to the ground, and also a second arc of a circle tangent to the first arc of a circle - with a horizontal tangent - and the radius of which is equal to the sum of the dive radius of curvature and the pull-up radius of curvature.

5. A procedure according to Claim 4, in which the guard height varies as a function of flight parameters of the aircraft.

6. A procedure according to any one of Claims 1 to 5, in which a level of danger represented by an obstacle is calculated as a function of the distance (D) between a guard curve and a profile of the terrain comprising the obstacle, and as a function of the time derivative (or variation) of this distance, this derivative corresponding to the speed of approach to the obstacle.

7. A procedure according to any one of Claims 1 to 6, in which a warning coefficient which represents the danger represented by the obstacle is calculated for each obstacle or point of a vertical terrain profile, in accordance with the formula:

$$\text{Coeff - warning} = G \times \left( -\frac{(D)}{\frac{dD}{dt}} + \tau \times \left[ \frac{d\left[ \frac{(D)}{dD} \right]}{dt} \right] \right),$$

where G is a gain.

8. A procedure according to any one of Claims 1 to 7, in which a visual indicator of the danger represented by obstacles is presented to the pilot, which indicator comprises a set of coloured lights representing the danger represented by obstacles, in bearing relative to the lubber line of the aircraft, per angular sector of the field ahead of the aircraft.

9. A procedure according to any one of Claims 1 to 8, in which a visual alarm is activated as a function of the values of the warning time ($\tau$), of a pull-up load factor (nc), and of a dive load factor (np).

10. A system (24 to 26) for assisting in the piloting of an aircraft, **characterised in that** it is programmed for implementing a procedure according to any one of Claims 1 to 9.

**Patentansprüche**

1. Verfahren für die Lenkunterstützung eines Flugzeugs, bei dem eine Sicherheitskurve als Funktion der Betriebsmittel des Flugzeugs bestimmt wird, bei dem durch Telemetrie die Position eines vor dem Flugzeug vorhandenen Hindernisses oder Geländepunkts gemessen wird, der Abstand (D), der die Sicherheitskurve von dem Hindernis oder dem Geländepunkt trennt, berechnet wird und ein Sturzflugbefehl oder ein Hochziehbefehl als Funktion dieses Abstandes erzeugt wird,

wobei der Sturzflug- oder Hochziehbefehl $\dfrac{d\varphi}{dt}$ gemäß der folgenden Formel bestimmt wird:

$$\frac{d\varphi}{dt} = G \times \left( D + \tau \times \frac{dD}{dt} \right),$$ wobei G eine Verstärkung ist und ($\tau$) eine Vorankündigungszeit ist,

und bei dem ein Hochziehbefehl erzeugt wird, wenn die Summe $\left( D + \tau \times \dfrac{dD}{dt} \right)$ negativ ist, und ein Sturzflugbefehl erzeugt wird, wenn diese Summe positiv ist,

**dadurch gekennzeichnet, dass** in mehreren im Voraus definierten Winkelsektoren (30) als Funktion eines Blickfeldes (FOR) die Punkte einer Lenkkurve (CP) berechnet werden, die dem Piloten dargestellt wird, indem, wenn vorhanden, für jedes vertikale Geländeprofil in einem im Voraus definierten Winkelsektor der Punkt des Profils gewählt wird, der einem Maximalhochziehbefehl entspricht, und indem, wenn nicht vorhanden, entweder der Punkt des Profils, der einem minimalen Sturzflugbefehl entspricht, oder der Punkt des Profils, für den der Ausdruck

$$T = -D \bigg/ \left( \frac{\Delta D}{\Delta t} \right)$$

**2.** Verfahren nach Anspruch 1, bei dem eine statische Sicherheitskurve (CGF) als Funktion eines Hochzieh-Krümmungsradius und eines Sturzflug-Krümmungsradius bestimmt wird, wobei diese Radien jeweils als Funktion eines Hochzieh-Lastfaktors bzw. eines Sturzflug-Lastfaktors sowie als Funktion des Betrags der Geschwindigkeit des Flugzeugs bestimmt werden, und bei dem, um den Abstand (D) zu bestimmen, der die statische Sicherheitskurve in einer vertikalen Ebene von einem Geländeprofil trennt, die Abstände berechnet werden, um die diese Kurve von jedem der Punkte des Geländeprofils getrennt ist, deren Koordinaten anhand von Plot-Koordinaten, die durch Telemetrie geliefert werden, und anhand von Informationen über die Position des Flugzeugs, die von einem Navigationswerkzeug geliefert werden, berechnet werden, und dann der kleinste dieser Abstände berechnet wird, dessen Wert dem Abstand (D) zugewiesen wird.

**3.** Verfahren nach einem der Ansprüche 1 oder 2, bei dem dem Piloten die Lenkkurve überlagert mit einem Bild des Gebiets oder des Raums vor dem Flugzeug sowie mit einer künstlichen Horizontlinie und mit einem Achsenkreuz, das den aktuellen Geschwindigkeitsvektor des Flugzeugs anzeigt, dargestellt wird.

**4.** Verfahren nach einem der Ansprüche 1 bis 3, bei dem die statische Sicherheitskurve einen ersten Kreisbogen, dessen Radius gleich der Summe aus dem Sturzflug-Krümmungsradius und einer Sicherheitshöhe (Hg) in Bezug auf das Gelände ist, sowie einen zweiten Kreisbogen, der zu dem ersten Kreisbogen - längs einer horizontalen Tangente - tangential ist und dessen Radius gleich der Summe aus dem Sturzflug-Krümmungsradius und dem Hochzieh-Krümmungsradius ist, umfasst.

**5.** Verfahren nach Anspruch 4, bei dem sich die Sicherheitshöhe als Funktion von Flugparametern des Flugzeugs verändert.

**6.** Verfahren nach einem der Ansprüche 1 bis 5, bei dem ein Gefährlichkeitsgrad eines Hindernisses als Funktion des Abstands (D), der eine Sicherheitskurve von einem das Hindernis enthaltenden Geländeprofil trennt, und als Funktion der zeitlichen Ableitung (oder Veränderung) dieses Abstandes berechnet wird, wobei diese Ableitung der Annäherungsgeschwindigkeit an das Hindernis entspricht.

**7.** Verfahren nach einem der Ansprüche 1 bis 6, bei dem für jedes Hindernis oder jeden Punkt eines vertikalen Geländeprofils ein Vorankündigungskoeffizient, der die Gefährlichkeit des Hindernisses repräsentiert, gemäß der folgenden Formel berechnet wird:

$$\text{Koeff} - \text{Vorankünd.} = G \times \left[ -\frac{D}{\frac{dD}{dt}} + \tau \times \left[ \frac{d\left[\frac{D}{\frac{dD}{dt}}\right]}{dt} \right] \right],$$

wobei G eine Verstärkung ist.

8. Verfahren nach einem der Ansprüche 1 bis 7, bei dem dem Piloten eine visuelle Anzeige der Gefährlichkeit von Hindernissen, die eine Anordnung farbiger Anzeigelampen enthält, die die Gefährlichkeit von Hindernissen repräsentieren, seitlich in Bezug auf die Nulllinie des Flugzeugs pro Winkelsektor des Gebiets vor dem Flugzeug dargestellt wird.

9. Verfahren nach einem der Ansprüche 1 bis 8, bei dem ein visueller Alarm als Funktion von Voranmeldungszeitwerten (τ), eines Hochzieh-Lastfaktors (nc) und eines Sturzflug-Lastfaktors (np) ausgelöst wird.

10. System (24 bis 26) für die Lenkunterstützung eines Flugzeugs,
**dadurch gekennzeichnet, dass** es für die Ausführung eines Verfahrens nach einem der Ansprüche 1 bis 9 programmiert ist.

Fig.1

Fig.2

Fig.3

EP 1 726 973 B1

Fig.4

Fig.5

Fig.6

18

EP 1 726 973 B1

Fig.7

VIII

XII

XI

IX

X

Hg

Hg

TR

Hg

26

RE

HA

CP

Fig.8

26

RE

CP

HA

Fig.9

26

CP

RE

HA

Fig.10

26

RE

HA

CP

Fig.11

26

HA

RE

CP

Fig.12

Fig.13

**EP 1 726 973 B1**

## RÉFÉRENCES CITÉES DANS LA DESCRIPTION

**Documents brevets cités dans la description**

- US 3396391 A
- FR 2712251
- US 5555175 A
- FR 87853 E